# EUROPEAN PATENT APPLICATION

(11) **EP 4 745 380 A2**
(43) Date of publication of application: **20.05.2026**
(21) Application number: 25216762.2
(22) Date of filing: 18.11.2025
(51) Int. Cl.: F02C 7/32

(54) **ACCESSORY GEARBOX WITH MULTIPLE POWER TRANSFER SYSTEMS**

(30) Priority: 18.11.2024 US 202418951053
(71) Applicant: RTX Corporation, Farmington, CT 06032 (US)
(72) Inventor: CLARK, Thomas E., Wells (US); AKIN, John, Charlotte (US)
(74) Representative: Dehns

(57) **Abstract**

An assembly is provided for an aircraft powerplant. This assembly includes a gearbox (98), an engine accessory, an engine core (46), a motor accessory and an electric motor (100). The gearbox (98) includes an engine power transfer system (110, 111) and a motor power transfer system (112) independent of the engine power transfer system (110, 111). The engine accessory includes an engine accessory rotor. The engine core (46) includes a flowpath (82), a compressor section (41), a combustor section (42), a turbine section (43) and an engine rotating assembly. The flowpath (82) extends through the compressor section (41), the combustor section (42) and the turbine section (43). The engine rotating assembly includes a turbine rotor in the turbine section (43). The engine rotating assembly is operatively coupled to the engine accessory rotor through the engine power transfer system (110, 111). The motor accessory includes a motor accessory rotor (142). The electric motor (100) includes an electric motor rotor (140) operatively coupled to the motor accessory rotor (142) through the motor power transfer system (112).

## Description

### BACKGROUND OF THE DISCLOSURE

### 1. Technical Field

This disclosure relates generally to an aircraft powerplant and, more particularly, to an accessory system for the aircraft powerplant.

### 2. Background Information

An aircraft powerplant such as a turbofan engine includes an accessory system. This accessory system may include various accessories such as fluid pumps, electric motors, electric generators, and the like. Various types and configurations of accessory systems are known in the art. While these known accessory systems have various benefits, there is still room in the art for improvement.

### SUMMARY OF THE DISCLOSURE

According to an aspect of the present disclosure, an assembly is provided for an aircraft powerplant. This assembly includes a gearbox, an engine accessory, an engine core, a motor accessory and an electric motor. The gearbox includes an engine power transfer system and a motor power transfer system independent of the engine power transfer system. The engine accessory includes an engine accessory rotor. The engine core includes a flowpath, a compressor section, a combustor section, a turbine section and an engine rotating assembly. The flowpath extends through the compressor section, the combustor section and the turbine section. The engine rotating assembly includes a turbine rotor in the turbine section. The engine rotating assembly is operatively coupled to the engine accessory rotor through the engine power transfer system. The motor accessory includes a motor accessory rotor. The electric motor includes an electric motor rotor operatively coupled to the motor accessory rotor through the motor power transfer system.

According to another aspect of the present disclosure, another assembly is provided for an aircraft powerplant. This assembly includes a gearbox, an electric generator, an engine core, a motor accessory, an electric motor and an electrical system. The gearbox includes an engine power transfer system and a motor power transfer system. The electric generator includes a generator rotor. The engine core includes a flowpath, a compressor section, a combustor section, a turbine section and an engine rotating assembly. The flowpath extends through the compressor section, the combustor section and the turbine section. The engine rotating assembly includes a turbine rotor in the turbine section. The engine rotating assembly is operatively coupled to the generator rotor through the engine power transfer system. The motor accessory includes a motor accessory rotor. The electric motor includes an electric motor rotor operatively coupled to the motor accessory rotor through the motor power transfer system. The electrical system is electrically coupled to the electric generator and the electric motor. The electrical system is configured to receive electrical power from the electric generator during a mode of operation. The electrical system is also configured to provide electric power to the electric motor during the mode of operation.

According to still another aspect of the present disclosure, another assembly is provided for an aircraft powerplant. This assembly includes a case, a first power transfer system, a second power transfer system and a third power transfer system. The first power transfer system is housed within the case. The first power transfer system includes a first input and a first output. The first input is configured to input first mechanical power into the first power transfer system received from outside of the case. The first output is configured to output at least some of the first mechanical power out of the first power transfer system to outside of the case. The second power transfer system is housed within the case. The second power transfer system includes a second input and a second output. The second input is configured to input second mechanical power into the second power transfer system received from outside of the case. The second output is configured to output at least some of the second mechanical power out of the second power transfer system to outside of the case. The third power transfer system is housed within the case. The third power transfer system includes a third input and a third output. The third input is configured to input third mechanical power into the third power transfer system received from outside of the case. The third output is configured to output at least some of the third mechanical power out of the third power transfer system to outside of the case.

The first power transfer system may be mechanically and operatively decoupled from the second power transfer system and the third power transfer system. The second power transfer system may be mechanically and operatively decoupled from the third power transfer system.

The first power transfer system may also include a first gear system housed within the case and operatively coupling the first input to the first output. In addition or alternatively, the second power transfer system may also include a second gear system housed within the case and operatively coupling the second input to the second output. In addition or alternatively, the third power transfer system may also include a third gear system housed within the case and operatively coupling the third input to the third output.

The assembly may also include an electric motor, a first engine rotating assembly and a second engine rotating assembly. The electric motor may be operatively coupled to the first input. The first engine rotating assembly may be operatively coupled to the second input. The first engine rotating assembly may include a first turbine rotor. The second engine rotating assembly may be operatively coupled to the third input. The second engine rotating assembly may include a second turbine rotor.

The engine power transfer system may be mechanically and operatively decoupled from the motor power transfer system.

The motor power transfer system may be mechanically disengaged from the engine power transfer system within the gearbox.

The engine power transfer system may be configured as or otherwise include an engine gear system. The engine rotating assembly may be operatively coupled to the engine accessory rotor through the engine gear system. In addition or alternatively, the motor power transfer system may be configured as or otherwise include a motor gear system. The electric motor rotor may be operatively coupled to the motor accessory rotor through the motor gear system.

A gear of the engine gear system may be configured to rotate at a rotational speed that is independent from a rotational speed of a gear of the motor gear system.

The gearbox may also include a case. The motor power transfer system and the engine power transfer system may be housed within the case.

The motor power transfer system and the engine power transfer system may be housed within a common compartment within the case.

The motor power transfer system and the engine power transfer system may be serviced by a common lubrication system.

The engine rotating assembly may be configured to drive rotation of the engine accessory rotor through the engine power transfer system during a first mode of operation. The electric motor rotor may be configured to drive rotation of the motor accessory rotor through the motor power transfer system during the first mode of operation.

The engine accessory rotor may be configured to drive rotation of the engine rotating assembly through the engine power transfer system during a second mode of operation. The electric motor rotor may be configured to drive rotation of the motor accessory rotor through the motor power transfer system during the second mode of operation.

The assembly may also include an electrical system. The engine accessory may be configured as or otherwise include a generator electrically coupled to the electric motor through the electrical system.

The motor accessory may be configured as or otherwise include a fuel pump.

The motor accessory may be configured as or otherwise include a lubrication pump.

The motor accessory may be configured as or otherwise include a hydraulic pump.

The motor accessory may be configured as or otherwise include a de-oiler.

The assembly may also include a second motor accessory which includes a second motor accessory rotor. The electric motor rotor may also be operatively coupled to the second motor accessory rotor through the motor power transfer system.

The assembly may also include a second engine accessory which includes a second engine accessory rotor. The gearbox may also include a second engine power transfer system independent of the motor power transfer system and the engine power transfer system. The engine core may also include a second engine rotating assembly. The second engine rotating assembly may include a second turbine rotor in the turbine section. The second engine rotating assembly may be operatively coupled to the second engine accessory rotor through the second engine power transfer system.

The gearbox may also include a case. The motor power transfer system, the engine power transfer system and the second engine power transfer system may be housed within the case.

The motor power transfer system, the engine power transfer system and the second engine power transfer system may be housed within a common compartment within the case.

The engine power transfer system may be configured as or otherwise include an engine gear system. The engine rotating assembly may be operatively coupled to the engine accessory rotor through the engine gear system. In addition or alternatively, the second engine power transfer system may be configured as or otherwise include a second engine gear system. The second engine rotating assembly may be operatively coupled to the second engine accessory rotor through the second engine gear system. In addition or alternatively, the motor power transfer system may be configured as or otherwise include a motor gear system. The electric motor rotor may be operatively coupled to the motor accessory rotor through the motor gear system.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial schematic sectional illustration of an aircraft propulsion system.
FIG. 2 is a schematic illustration of a portion of the aircraft propulsion system with an accessory system.
FIG. 3 is a schematic illustration of a portion of the aircraft propulsion system with another accessory system arrangement.
FIG. 4 is a schematic illustration of a portion of the aircraft propulsion system with still another accessory system arrangement.

### DETAILED DESCRIPTION

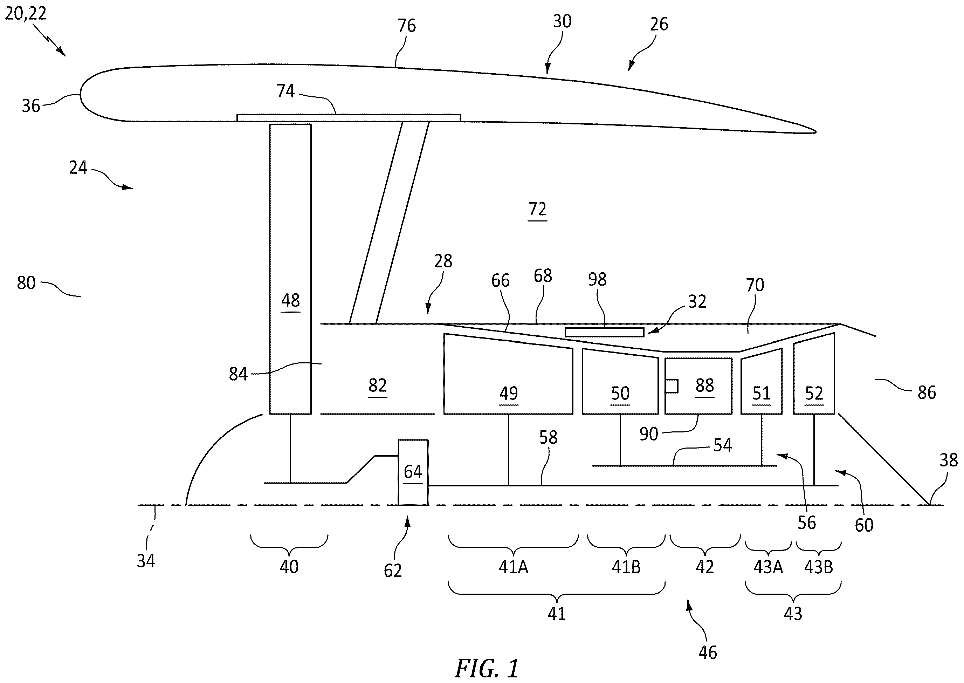

FIG. 1 illustrates a powerplant 20 for an aircraft. The aircraft may be an airplane, a rotorcraft (e.g., a helicopter), a drone (e.g., an unmanned aerial vehicle (UAV)) or any other manned or unmanned aerial vehicle or system. For ease of description, the aircraft powerplant 20 is described below as a propulsion system 22 for the aircraft and, more particularly, as a turbofan propulsion system. The aircraft powerplant 20 of the present disclosure, however, is not limited to such an exemplary propulsion system. The aircraft propulsion system 22, for example, may alternatively be configured as a turbojet propulsion system, a turboprop propulsion system, a turboshaft propulsion system, a propfan propulsion system, a pusher fan propulsion system, or any other type of ducted or open rotor propulsion system. Moreover, the aircraft powerplant 20 is not limited to propulsion system applications. The aircraft powerplant 20, for example, may alternatively (or also) be configured as an electrical power system for the aircraft; e.g., an auxiliary power unit (APU).

The aircraft propulsion system 22 includes a turbine engine 24 (e.g., a turbofan engine) housed within a stationary engine housing 26, which engine housing 26 of FIG. 1 includes an inner housing structure 28 and an outer housing structure 30. The aircraft propulsion system 22 also includes an accessory system 32 servicing one or more components and/or subsystems of the aircraft propulsion system 22 and its turbine engine 24. The aircraft propulsion system 22 extends axially along an axis 34 between an axial forward, upstream end 36 of the aircraft propulsion system 22 and an axial aft, downstream end 38 of the aircraft propulsion system 22. Briefly, the axis 34 may be a centerline axis of the aircraft propulsion system 22, the turbine engine 24 and/or one or more of its members. The axis 34 may also or alternatively be a rotational axis for one or more members of the turbine engine 24.

The turbine engine 24 of FIG. 1 includes a propulsor section 40 (e.g., a fan section), a compressor section 41, a combustor section 42 and a turbine section 43. The compressor section 41 of FIG. 1 includes a low pressure compressor (LPC) section 41A and a high pressure compressor (HPC) section 41B. The turbine section 43 of FIG. 1 includes a high pressure turbine (HPT) section 43A and a low pressure turbine (LPT) section 43B. Here, at least (or only) the LPC section 41A, the HPC section 41B, the combustor section 42, the HPT section 43A and the LPT section 43B collectively form a core 46 of the turbine engine 24.

The engine sections 40-43B may be arranged sequentially along the axis 34 within the engine housing 26. The propulsor section 40 includes a bladed propulsor rotor 48; e.g., a fan rotor. The LPC section 41A includes a bladed low pressure compressor (LPC) rotor 49. The HPC section 41B includes a bladed high pressure compressor (HPC) rotor 50. The HPT section 43A includes a bladed high pressure turbine (HPT) rotor 51. The LPT section 43B includes a bladed low pressure turbine (LPT) rotor 52.

The HPC rotor 50 is coupled to and rotatable with the HPT rotor 51. The HPC rotor 50 of FIG. 1, for example, is connected to the HPT rotor 51 through a high speed shaft 54. At least (or only) the HPC rotor 50, the HPT rotor 51 and the high speed shaft 54 collectively form a high speed rotating assembly 56; e.g., a high speed spool of the engine core 46. This high speed rotating assembly 56 of FIG. 1 and its members 50, 51 and 54 are rotatable about the axis 34. However, it is contemplated the high speed rotating assembly 56 may alternatively be rotatable about another axis radially and/or angularly offset from the rotational axis of the propulsor rotor 48 and/or the centerline axis of the turbine engine 24.

The LPC rotor 49 is coupled to and rotatable with the LPT rotor 52. The LPC rotor 49 of FIG. 1, for example, is connected to the LPT rotor 52 through a low speed shaft 58. At least (or only) the LPC rotor 49, the LPT rotor 52 and the low speed shaft 58 collectively form a low speed rotating assembly 60; e.g., a low speed spool of the engine core 46. This low speed rotating assembly 60 is further coupled to the propulsor rotor 48 through a drivetrain 62. The drivetrain 62 may be configured as a geared drivetrain, where a geartrain 64 (e.g., a transmission, a speed change device, an epicyclic geartrain, etc.) is disposed between and operatively couples the propulsor rotor 48 to the low speed rotating assembly 60 and its LPT rotor 52. With this arrangement, the propulsor rotor 48 may rotate at a different (e.g., slower) rotational speed than the low speed rotating assembly 60 and its LPT rotor 52. Alternatively, the drivetrain 62 may be configured as a direct drive drivetrain, where the geartrain 64 is omitted. With such an arrangement, the propulsor rotor 48 rotates at a common (the same) rotational speed as the low speed rotating assembly 60 and its LPT rotor 52. The low speed rotating assembly 60 of FIG. 1 and its members 49, 52 and 58 as well as the propulsor rotor 48 are rotatable about the axis 34. However, it is contemplated the low speed rotating assembly 60 may alternatively be rotatable about another axis radially and/or angularly offset from the rotational axis of the propulsor rotor 48 and/or the centerline axis of the turbine engine 24.

The inner housing structure 28 of FIG. 1 includes an inner case 66 (e.g., a core case) for the turbine engine 24, an inner nacelle structure 68 (sometimes referred to as an inner fixed structure (IFS)) and an internal inner housing compartment 70. The inner case 66 is disposed radially outboard of, extends axially along and may circumscribe one or more or all of the engine sections 41A-43B and their respective engine rotors 49-52. The inner case 66 may thereby house and provide a support structure for the respective engine sections 41A-43B and their respective engine rotors 49-52. The inner nacelle structure 68 is configured to provide an aerodynamic cover over the engine core 46 and its inner case 66. The inner housing compartment 70 of FIG. 1 is formed by and is disposed radially between the inner case 66 and an inner barrel of the inner nacelle structure 68. The inner housing structure 28 and its inner nacelle structure 68 may also form a radial inner peripheral boundary of a (e.g., annular) bypass flowpath 72 within the aircraft propulsion system 22.

The outer housing structure 30 of FIG. 1 includes an outer case 74 (e.g., a fan case) for the turbine engine 24 and an outer nacelle structure 76. The outer case 74 is disposed radially outboard of, extends axially along and may circumscribe the propulsor section 40 and its propulsor rotor 48. The outer case 74 may thereby house and provide a containment structure for the propulsor section 40 and its propulsor rotor 48. The outer nacelle structure 76 is configured to provide an aerodynamic cover over the outer case 74. The outer housing structure 30 and its outer nacelle structure 76 may also form a radial outer peripheral boundary of the bypass flowpath 72.

During operation, ambient air from outside of the aircraft enters the aircraft propulsion system 22 and its turbine engine 24 through an airflow inlet 80. This air is directed across the propulsor section 40 and into a (e.g., annular) core flowpath 82 and the bypass flowpath 72. The core flowpath 82 of FIG. 1 extends sequentially through the LPC section 41A, the HPC section 41B, the combustor section 42, the HPT section 43A and the LPT section 43B from an airflow inlet 84 into the core flowpath 82 to a combustion products exhaust 86 out from the core flowpath 82 and the engine core 46. The air entering the core flowpath 82 may be referred to as "core air". The bypass flowpath 72 extends through a bypass duct, which bypass flowpath 72 and bypass duct bypass (e.g., are disposed radially outboard of and extend along) the engine core 46 and the inner housing structure 28. The air within the bypass flowpath 72 may be referred to as "bypass air".

The core air is compressed by the LPC rotor 49 and the HPC rotor 50 and is directed into a (e.g., annular) combustion chamber 88 of a (e.g., annular) combustor 90 in the combustor section 42. Fuel is injected into the combustion chamber 88 by one or more fuel injectors and mixed with the compressed core air to provide a fuel-air mixture. This fuel-air mixture is ignited and combustion products thereof flow through and sequentially drive rotation of the HPT rotor 51 and the LPT rotor 52 about the axis 34. The rotation of the HPT rotor 51 and the LPT rotor 52 respectively drive rotation of the HPC rotor 50 and the LPC rotor 49 about the axis 34 and, thus, compression of the air received from the core inlet 84. The rotation of the LPT rotor 52 also drives rotation of the propulsor rotor 48. The rotation of the propulsor rotor 48 propels the bypass air through and out of the bypass flowpath 72. The propulsion of the bypass air may account for a majority of thrust generated by the turbine engine 24 of FIG. 1.

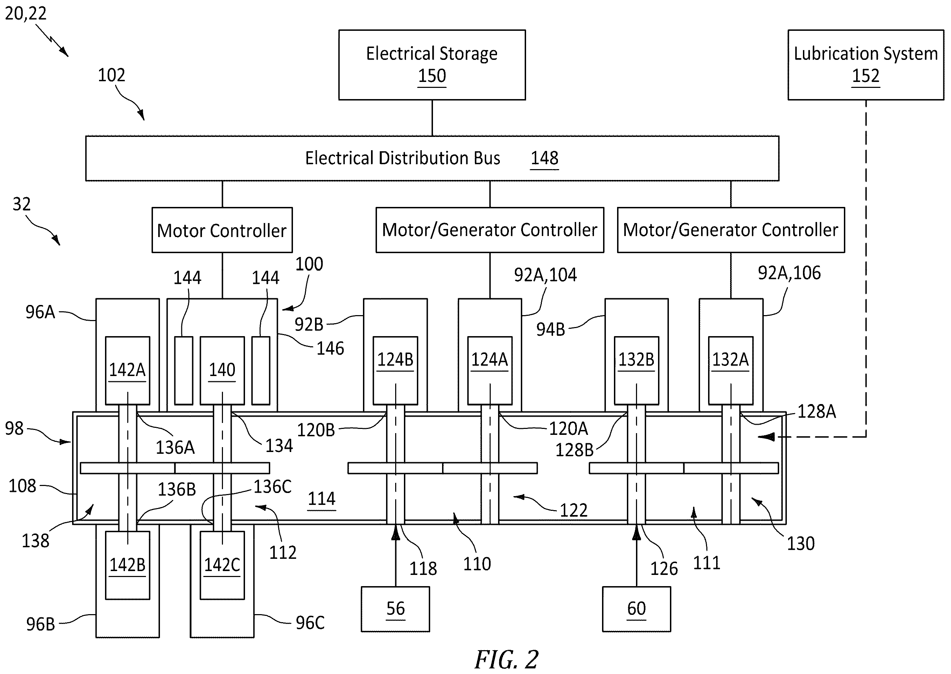

Referring to FIG. 2, the accessory system 32 includes one or more engine accessories 92A and 92B (generally referred to as "92"), 94A and 94B (generally referred to as "94"), one or more motor accessories 96A-C (generally referred to as "96"), an accessory gearbox 98 and an electric motor 100. The accessory system 32 of FIG. 2 is also arranged with an aircraft electrical system 102.

Each of the engine accessories 92, 94 may be mounted to or otherwise arranged with the accessory gearbox 98. Examples of the engine accessories 92, 94 include, but are not limited to, fluid pump(s), de-oiler(s) and/or electric machines. Examples of the fluid pumps include, but are not limited to, fuel pump(s), hydraulic pump(s) and/or lubricant pump(s). Examples of the electric machines include, but are not limited to, variable frequency generator(s), integral drive generator(s), permanent magnet motor-generator(s) and/or permanent magnet motor(s). In the exemplary embodiment of FIG. 2, one of the first engine accessories (e.g., 92A) is configured as a first electric machine 104 (e.g., a motor-generator), and one of the second engine accessories (e.g., 94A) is configured as a second electric machine 106 (e.g., a motor-generator).

Each of the motor accessories 96 may be mounted to or otherwise arranged with the accessory gearbox 98. Examples of the motor accessories 96 include, but are not limited to, fluid pump(s) and/or de-oiler(s). Examples of the fluid pumps include, but are not limited to, fuel pump(s), hydraulic pump(s) and/or lubricant pump(s). One or more of these motor accessories 96 may provide a similar functionality as one or more of the engine accessories 92, 94 in order to provide redundancy. In addition or alternatively, one or more of the motor accessories 96 may provide a different functionality than the engine accessories 92, 94.

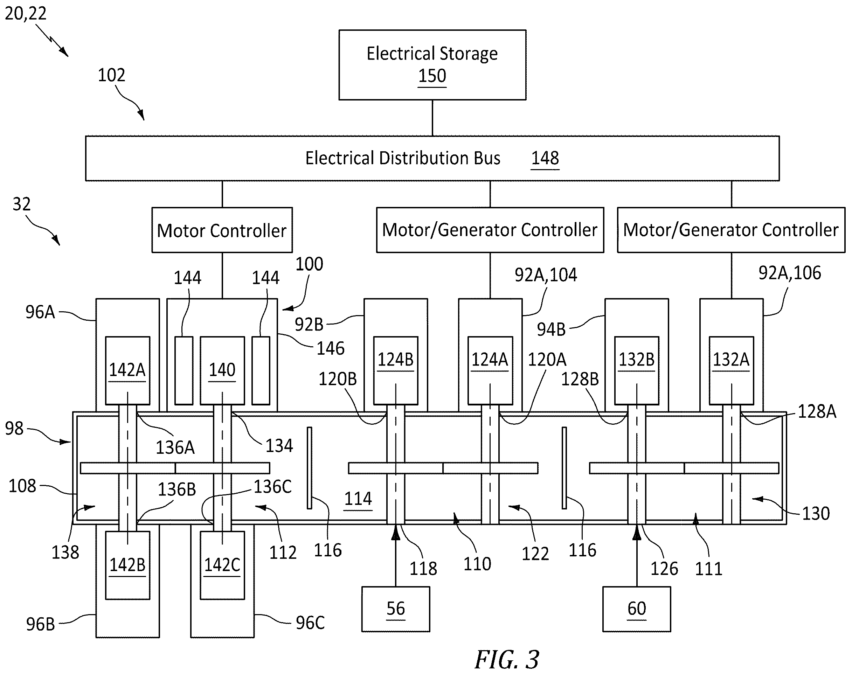

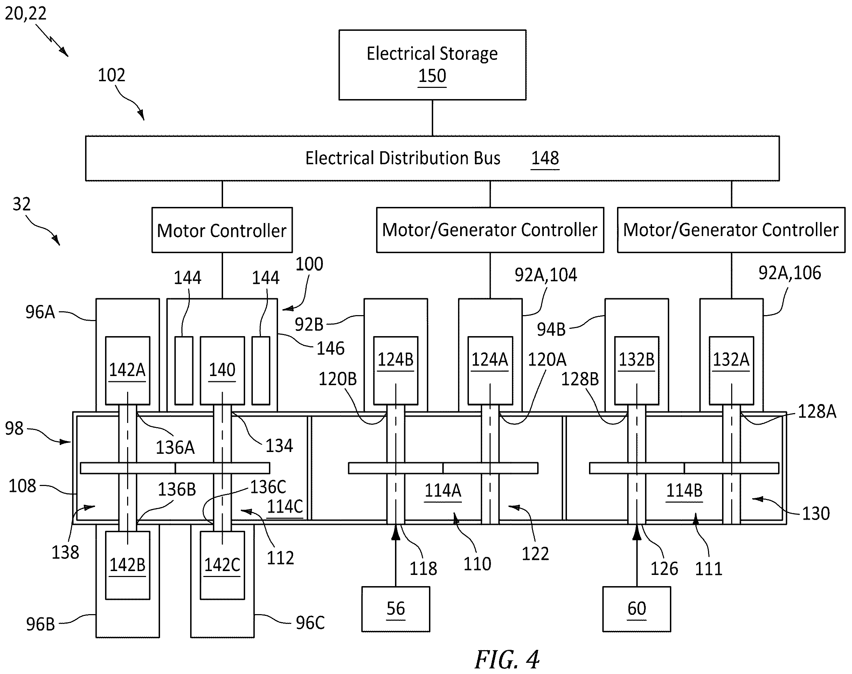

The accessory gearbox 98 includes a gearbox case 108, one or more engine power transfer systems 110 and 111 and a motor power transfer system 112. Each of the power transfer systems 110, 111, 112 is partially or completely housed within the gearbox case 108. The power transfer systems 110-112 of FIGS. 2 and 3, for example, may be partially or completely located within a common (e.g., the same) internal gearbox compartment 114 of the gearbox case 108. Referring to FIG. 2, the gearbox compartment 114 may be an open compartment within the gearbox case 108. Alternatively, referring to FIG. 3, the gearbox compartment 114 may be subdivided into one or more (e.g., fluidly coupled) sub-compartments within the gearbox case 108 by one or more baffles 116. Still alternatively, referring to FIG. 4, the gearbox case 108 may include multiple internal gearbox compartments 114A-C (generally referred to as "114"), where at least one of the power transfer systems 110, 111, 112 may be partially or completely located within a separate one of the gearbox compartments 114 than another one of the power transfer systems 110, 111, 112.

Referring to FIG. 2, the first engine power transfer system 110 is configured to transfer mechanical power through the accessory gearbox 98 (e.g., mechanically and operatively) independent of the other power transfer systems 111 and 112. The first engine power transfer system 110 of FIG. 2, for example, is spatially separated from the other power transfer systems 111 and 112 within the gearbox case 108 such that the first engine power transfer system 110 is operatively decoupled (e.g., mechanically disconnected) from the other power transfer systems 111 and 112; e.g., during all modes of operation.

The first engine power transfer system 110 of FIG. 2 includes a first engine coupling 118, one or more first accessory couplings 120A and 120B (generally referred to as "120") and a first engine gear system 122. The first engine coupling 118 is operatively coupled to the high speed rotating assembly 56 through, for example, a tower shaft assembly. Each first accessory coupling 120A, 120B is operatively coupled to a rotor 124A, 124B (generally referred to as "124") of a respective one of the first engine accessories 92A, 92B. The first engine gear system 122 is (e.g., completely) housed within the accessory gearbox 98. This first engine gear system 122 is operatively coupled between the first engine coupling 118 and the first accessory couplings 120. With this arrangement, during a first mode of operation, the first engine power transfer system 110 and its first engine gear system 122 are configured to transfer mechanical power from the high speed rotating assembly 56 to the first engine accessory rotors 124. Here, the first engine coupling 118 is operable as a power input into the first engine power transfer system 110 and its first engine gear system 122, and the first accessory couplings 120 are operable as power outputs from the first engine power transfer system 110 and its first engine gear system 122. During a second mode of operation, the first engine power transfer system 110 and its first engine gear system 122 may be configured to transfer mechanical power from one of the first engine accessory rotors (e.g., 124A) to one or more of the other couplings (e.g., 118, 120B). Here, the first accessory coupling (e.g., 120A) is operable as a power input into the first engine power transfer system 110 and its first engine gear system 122, and the other couplings (e.g., 118, 120B) are operable as power outputs from the first engine power transfer system 110 and its first engine gear system 122.

The second engine power transfer system 111 is configured to transfer mechanical power through the accessory gearbox 98 (e.g., mechanically and operatively) independent of the other power transfer systems 110 and 112. The second engine power transfer system 111 of FIG. 2, for example, is spatially separated from the other power transfer systems 110 and 112 within the gearbox case 108 such that the second engine power transfer system 111 is operatively decoupled (e.g., mechanically disconnected) from the other power transfer systems 110 and 112; e.g., during all modes of operation.

The second engine power transfer system 111 of FIG. 2 includes a second engine coupling 126, one or more second accessory couplings 128A and 128B (generally referred to as "128") and a second engine gear system 130. The second engine coupling 126 is operatively coupled to the low speed rotating assembly 60 through, for example, a tower shaft assembly. Each second accessory coupling 128A, 128B is operatively coupled to a rotor 132A, 132B (generally referred to as "132") of a respective one of the second engine accessories 94A, 94B. The second engine gear system 130 is (e.g., completely) housed within the accessory gearbox 98. This second engine gear system 130 is operatively coupled between the second engine coupling 126 and the second accessory couplings 128. With this arrangement, during the first mode of operation, the second engine power transfer system 111 and its second engine gear system 130 are configured to transfer mechanical power from the low speed rotating assembly 60 to the second engine accessory rotors 132. Here, the second engine coupling 126 is operable as a power input into the second engine power transfer system 111 and its second engine gear system 130, and the second accessory couplings 128 are operable as power outputs from the second engine power transfer system 111 and its second engine gear system 130. During the second mode of operation, the second engine power transfer system 111 and its second engine gear system 130 may be configured to transfer mechanical power from one of the second engine accessory rotors (e.g., 134A) to one or more of the other couplings (e.g., 126, 128B). Here, the second accessory coupling (e.g., 128A) is operable as a power input into the second engine power transfer system 111 and its second engine gear system 130, and the other couplings (e.g., 126, 128B) are operable as power outputs from the second engine power transfer system 111 and its second engine gear system 130.

The motor power transfer system 112 is configured to transfer mechanical power through the accessory gearbox 98 (e.g., mechanically and operatively) independent of the other power transfer systems 110 and 111. The motor power transfer system 112 of FIG. 2, for example, is spatially separated from the other power transfer systems 110 and 111 within the gearbox case 108 such that the motor power transfer system 112 is operatively decoupled (e.g., mechanically disconnected) from the other power transfer systems 110 and 111; e.g., during all modes of operation.

The motor power transfer system 112 of FIG. 2 includes a motor coupling 134, one or more motor accessory couplings 136A-136C (generally referred to as "136") and a motor gear system 138. The motor coupling 134 is operatively coupled to an electric motor rotor 140 of the electric motor 100. Each motor accessory coupling is operatively coupled to a rotor 142A-C (generally referred to as "142") of a respective one of the motor accessories 96. The motor gear system 138 is (e.g., completely) housed within the accessory gearbox 98. This motor gear system 138 is operatively coupled between the motor coupling 134 and the motor accessory couplings 136. With this arrangement, during the first and/or the second modes of operation, the motor power transfer system 112 and its motor gear system 138 may be configured to transfer mechanical power from the motor rotor 140 to the motor accessory rotors 142. Here, the motor coupling 134 is operable as a power input into the motor power transfer system 112 and its motor gear system 138, and the motor accessory couplings 136 are operable as power outputs from the motor power transfer system 112 and its motor gear system 138.

The electric motor 100 includes its motor rotor 140, an electric motor stator 144 and an electric motor housing 146. The motor rotor 140 is rotatable about a rotational axis of the motor rotor 140. The motor stator 144 of FIG. 2 is radially outboard of and circumscribes the motor rotor 140. With this arrangement, the electric motor 100 is configured as a radial flux electric motor. The electric motor 100 of the present disclosure, however, is not limited to such an exemplary rotor-stator configuration nor to radial flux arrangements. The motor rotor 140, for example, may alternatively be radially outboard of and circumscribe the motor stator 144. In another example, the motor rotor 140 may be axially next to the motor stator 144 configuring the electric machine as an axial flux electric motor. The motor rotor 140 and the motor stator 144 of FIG. 2 are at least partially or completely housed within the motor housing 146. Here, the electric motor 100 and its motor housing 146 are mounted to the accessory gearbox 98 and its gearbox case 108.

The electrical system 102 of FIG. 2 includes an electrical distribution bus 148 and an electrical storage 150. The electrical distribution bus 148 is electrically coupled to the electric motor 100 (e.g., through a motor controller), the first electric machine 104 (e.g., through a motor-generator controller), the second electric machine 106 (e.g., through a motor-generator controller) and the electrical storage 150. The electrical distribution bus 148 may thereby transfer electricity from any one or more of the system members 104, 106, 150 to the electric motor 100 during operation. The electrical storage 150 is configured to store electricity. The electrical storage 150 is also configured to provide the stored electricity to the electrical distribution bus 148. The electrical storage 150, for example, may be configured as or otherwise include one or more electricity storage devices; e.g., batteries, supercapacitors, etc. Of course, it is contemplated the electric motor 100 may also or alternatively be electrically powered by one or more other power sources; e.g., an electric generator from a companion propulsion system, an auxiliary power unit, or the like.

During the first and/or the second modes of operation, the electric motor 100 may receive electricity from any one or more of the system members 104, 106, 150 through the electrical distribution bus 148. The electric motor 100 converts this electricity into mechanical power. The motor stator 144, for example, may generate an electromagnetic field with the motor rotor 140 using the electricity. This electromagnetic field may drive rotation of the motor rotor 140. The motor rotor 140 may thereby drive rotation of the motor accessory rotors 142 through the motor power transfer system 112 and its motor gear system 138. With this arrangement, the motor accessory rotors 142 may be rotationally driven at respective rotational speed(s) (depending on the gearing of the motor gear system 138) that are independent of / not tied to rotational speeds of the low speed rotating assembly 60 and/or the high speed rotating assembly 56. The motor accessory rotors 142 may thereby operate at constant rotational speed(s), or the rotational speed(s) of the motor accessory rotors 142 may be tailored based on output requirements for the motor accessories 96. Decoupling operation of the motor accessory rotors 142 from the low speed rotating assembly 60 and the high speed rotating assembly 56 may also facilitate provision of lighter weight, smaller, less expensive motor accessories 96 since the motor accessories 96 may be subject to (e.g., about 30-70%) slower, more constant speeds from the electric motor 100, than if coupled to the low speed rotating assembly 60 or the high speed rotating assembly 56.

By integrating the various power transfer systems 110-112 and their gear systems 122, 130, 138 into the common gear case 108, packing for the accessory system 32 may be reduced and localized to a common location. Moreover, by sharing the common gear case 108, the power transfer systems 110-112 and their gear systems 122, 130, 138 may also share a common lubrication system 152.

While the accessory gearbox 98 is described above with multiple engine power transfer systems 110 and 111, the present disclosure is not limited to such an exemplary arrangement. In some embodiments, for example, the first engine power transfer system 110 or the second engine power transfer system 111 may be omitted, or configured into a separate accessory gearbox. Moreover, while each of the power transfer systems 110, 111, 112 is described above as being coupled to multiple accessory rotors 124, 132, 142, the present disclosure is not limited thereto. Any one or more of the power transfer systems 110, 111, 112, for example, may alternatively be coupled to a single accessory rotor 124, 132, 142. In such embodiments, it is contemplated the respective gear system 122, 130, 138 may be replaced by a driveshaft or other coupling.

In some embodiments, referring to FIG. 1, the accessory gearbox 98 may be arranged in the inner housing compartment 70. The accessory gearbox 98, for example, may be mounted to the inner case 66. The present disclosure, however, is not limited to such an exemplary accessory gearbox location or mounting arrangement.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An assembly for an aircraft powerplant, comprising:
a gearbox including an engine power transfer system and a motor power transfer system independent of the engine power transfer system;
an engine accessory comprising an engine accessory rotor;
an engine core including a flowpath, a compressor section, a combustor section, a turbine section and an engine rotating assembly, the flowpath extending through the compressor section, the combustor section and the turbine section, the engine rotating assembly comprising a turbine rotor in the turbine section, and the engine rotating assembly operatively coupled to the engine accessory rotor through the engine power transfer system;
a motor accessory comprising a motor accessory rotor; and
an electric motor comprising an electric motor rotor operatively coupled to the motor accessory rotor through the motor power transfer system.

2. The assembly of claim 1, wherein the motor power transfer system is mechanically disengaged from the engine power transfer system within the gearbox.

3. The assembly of claim 1 or 2, wherein at least one of
the engine power transfer system comprises an engine gear system, and the engine rotating assembly is operatively coupled to the engine accessory rotor through the engine gear system; or
the motor power transfer system comprises a motor gear system, and the electric motor rotor is operatively coupled to the motor accessory rotor through the motor gear system.

4. The assembly of claim 3, wherein a gear of the engine gear system is configured to rotate at a rotational speed that is independent from a rotational speed of a gear of the motor gear system.

5. The assembly of any preceding claim, wherein
the gearbox further includes a case; and
the motor power transfer system and the engine power transfer system are housed within the case.

6. The assembly of claim 5, wherein the motor power transfer system and the engine power transfer system are housed within a common compartment within the case.

7. The assembly of any preceding claim, wherein the motor power transfer system and the engine power transfer system are serviced by a common lubrication system.

8. The assembly of any preceding claim, wherein
the engine rotating assembly is configured to drive rotation of the engine accessory rotor through the engine power transfer system during a first mode of operation; and
the electric motor rotor is configured to drive rotation of the motor accessory rotor through the motor power transfer system during the first mode of operation.

9. The assembly of claim 8, wherein
the engine accessory rotor is configured to drive rotation of the engine rotating assembly through the engine power transfer system during a second mode of operation; and
the electric motor rotor is configured to drive rotation of the motor accessory rotor through the motor power transfer system during the second mode of operation.

10. The assembly of any preceding claim, further comprising:
an electrical system;
wherein the engine accessory comprises a generator electrically coupled to the electric motor through the electrical system.

11. The assembly of any preceding claim, wherein the motor accessory comprises a fuel pump, and / or a lubrication pump, and / or a hydraulic pump. and / or a de-oiler.

12. The assembly of any preceding claim, further comprising:
a second motor accessory comprising a second motor accessory rotor;
the electric motor rotor further operatively coupled to the second motor accessory rotor through the motor power transfer system; and/or
further comprising:
a second engine accessory comprising a second engine accessory rotor;
the gearbox further including a second engine power transfer system independent of the motor power transfer system and the engine power transfer system; and
the engine core further including a second engine rotating assembly, the second engine rotating assembly comprising a second turbine rotor in the turbine section, and the second engine rotating assembly operatively coupled to the second engine accessory rotor through the second engine power transfer system.

13. An assembly for an aircraft powerplant, comprising:
a gearbox including an engine power transfer system and a motor power transfer system;
an electric generator comprising a generator rotor;
an engine core including a flowpath, a compressor section, a combustor section, a turbine section and an engine rotating assembly, the flowpath extending through the compressor section, the combustor section and the turbine section, the engine rotating assembly comprising a turbine rotor in the turbine section, and the engine rotating assembly operatively coupled to the generator rotor through the engine power transfer system;
a motor accessory comprising a motor accessory rotor;
an electric motor comprising an electric motor rotor operatively coupled to the motor accessory rotor through the motor power transfer system; and
an electrical system electrically coupled to the electric generator and the electric motor, the electrical system configured to receive electrical power from the electric generator during a mode of operation, and the electrical system further configured to provide electric power to the electric motor during the mode of operation.

14. An assembly for an aircraft powerplant, comprising:
a case;
a first power transfer system housed within the case, the first power transfer system including a first input and a first output, the first input configured to input first mechanical power into the first power transfer system received from outside of the case, and the first output configured to output at least some of the first mechanical power out of the first power transfer system to outside of the case;
a second power transfer system housed within the case, the second power transfer system including a second input and a second output, the second input configured to input second mechanical power into the second power transfer system received from outside of the case, and the second output configured to output at least some of the second mechanical power out of the second power transfer system to outside of the case; and
a third power transfer system housed within the case, the third power transfer system including a third input and a third output, the third input configured to input third mechanical power into the third power transfer system received from outside of the case, and the third output configured to output at least some of the third mechanical power out of the third power transfer system to outside of the case.

15. The assembly of claim 14, wherein the first power transfer system is mechanically and operatively decoupled from the second power transfer system and the third power transfer system, and the second power transfer system is mechanically and operatively decoupled from the third power transfer system; and/or
wherein at least one of
the first power transfer system further includes a first gear system housed within the case and operatively coupling the first input to the first output;
the second power transfer system further includes a second gear system housed within the case and operatively coupling the second input to the second output; or
the third power transfer system further includes a third gear system housed within the case and operatively coupling the third input to the third output.
